(19) Europäisches Patentamt
European Patent Office
Office européen des brevets

(11) EP 4 289 798 A1

(12) **EUROPEAN PATENT APPLICATION**

(43) Date of publication:
**13.12.2023 Bulletin 2023/50**

(21) Application number: **22177524.0**

(22) Date of filing: **07.06.2022**

(51) International Patent Classification (IPC):
**C03B 23/207** (2006.01)   **C03B 37/012** (2006.01)
**C03B 37/027** (2006.01)

(52) Cooperative Patent Classification (CPC):
**C03B 37/0122; C03B 23/207; C03B 37/02781;**
C03B 2203/14; C03B 2203/16; C03B 2203/42

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **ASML Netherlands B.V.**
**5500 AH Veldhoven (NL)**
• **Max-Planck-Gesellschaft zur Förderung
der Wissenschaften e.V.
80539 München (DE)**

(72) Inventors:
• **UEBEL, Patrick, Sebastian**
**5500 AH Veldhoven (NL)**
• **LAGLER, Josef**
**5500 AH Veldhoven (NL)**
• **BAUERSCHMIDT, Sebastian, Thomas**
**5500 AH Veldhoven (NL)**
• **GÖTZ, Peter, Maximilian**
**5500 AH Veldhoven (NL)**

(74) Representative: **ASML Netherlands B.V.
Corporate Intellectual Property
P.O. Box 324
5500 AH Veldhoven (NL)**

(54) **METHOD OF PRODUCING PHOTONIC CRYSTAL FIBERS**

(57) A method of producing photonic crystal fiber (PCF) preforms, comprising obtaining a plurality of preform capillaries; measuring the wall thickness of each of the plurality of preform capillaries along at least a portion of its circumference at one or more axial positions; selecting a number of preform capillaries from the plurality of preform capillaries at least based on a thickness criterion,; and placing the selected preform capillaries in a glass tube (or jacket tube) to form a PCF preform having at least one ring arrangement of the selected preform capillaries; wherein the selected preform capillaries are oriented such that the portion of each of the selected preform capillaries, within which the measured wall thicknesses vary from the nominal wall thickness by no more than the maximum thickness variation, faces a longitudinal axis of the glass tube, said glass tube being substantially symmetrical about the longitudinal axis.

Fig. 7

**Description**

FIELD

The present invention relates to a method of producing photonic crystal fibers, in particular hollow-core photonic crystal fibers, and their applications in the manufacture of integrated circuits.

BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-ki lithography may be used to process features with dimensions smaller than the classical resolution limit of a lithographic apparatus. In such process, the resolution formula may be expressed as $CD = k_1 \times \lambda / NA$, where $\lambda$ is the wavelength of radiation employed, NA is the numerical aperture of the projection optics in the lithographic apparatus, CD is the "critical dimension" (generally the smallest feature size printed, but in this case half-pitch) and ki is an empirical resolution factor. In general, the smaller ki the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

Metrology tools are used in many aspects of the IC manufacturing process, for example as alignment tools for proper positioning of a substrate prior to an exposure, leveling tools to measure a surface topology of the substrate, for e.g., focus control and scatterometry based tools for inspecting/measuring the exposed and/or etched product in process control. In each case, a radiation source is required. For various reasons, including measurement robustness and accuracy, broadband or white light radiation sources are increasingly used for such metrology applications. It would be desirable to improve on present devices for broadband radiation generation. Among other techniques for white light generation, photonic crystal fibers (PCFs) may be used to convert narrowband input radiation to broadband output radiation via one or more nonlinear optical processes. The output performance of a PCF based radiation source has a strong dependence on the quality and properties of the PCF which are predominantly determined by the fiber manufacturing process. At present, PCFs are drawn in conventional optical fiber drawing towers which draw a fiber in a continuous manner. Such a conventional fiber manufacturing method often results in large variations in one or more dimensions of the internal structures of PCFs. Radiation sources using such PCFs for generation of broadband radiation would output light with undesired characteristics. Therefore, it is the object of the present invention to provide an improved method for producing PCFs.

SUMMARY

According to a first aspect of the invention, there is provided a method of producing photonic crystal fiber (PCF) preforms, comprising obtaining a plurality of preform capillaries; measuring the wall thickness of each of the plurality of preform capillaries along at least a portion of its circumference at one or more axial positions; selecting a number of preform capillaries from the plurality of preform capillaries at least based on a thickness criterion, the thickness criterion being that the wall thickness along at least a circumferential portion of a preform capillary varies from a nominal wall thickness by no more than a maximum thickness variation; and placing the selected preform capillaries in a glass tube (or jacket tube) to form a PCF preform having at least one ring arrangement of the selected preform capillaries; wherein the selected preform capillaries are oriented such that the portion of each of the selected preform capillaries, within which the measured wall thicknesses vary from the nominal wall thickness by no more than the maximum thickness variation, faces a longitudinal axis of the glass tube, said glass tube being substantially symmetrical about the longitudinal axis.

According to a second aspect of the invention, there is provided a method of producing photonic crystal fibers (PCFs), comprising: producing a PCF preform using the method of the first aspect of the present invention; drawing a PCF cane from the PCF preform; and drawing a final PCF from the PCF cane.

According to a third aspect of the invention, there is provided a PCF product produced using the method of the second aspect of the present invention.

Other aspects of the invention comprise metrology device comprising a PCF based broadband light source device comprising a PCF produced by the method of the first or second aspect.

BRIEF DESCRIPTION OF THE DRAWINGS

Embodiments of the invention will now be described, by way of example only, with reference to the accompanying schematic drawings, in which:

- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a schematic overview of a scatterometry apparatus used as a metrology device, which may comprise a radiation source according to embodiments of the invention;
- Figure 5 depicts a schematic overview of a level sensor apparatus which may comprise a radiation source according to embodiments of the invention;
- Figure 6 depicts a schematic overview of an alignment sensor apparatus which may comprise a radiation source according to embodiments of the invention;
- Figure 7 is a schematic cross sectional view of a hollow core optical fiber that may form part of a radiation source according to an embodiment in a transverse plane (i.e. perpendicular to an axis of the optical fiber);
- Figure 8 depicts a schematic representation of a radiation source according to an embodiment for providing broadband output radiation;
- Figures 9(a) and 9(b) schematically depict the transverse cross-sections of examples of hollow core photonic crystal fiber (HC-PCF) designs for supercontinuum generation;
- Figures 10(a) - 10(c) show three transverse cross-section images taken respectively at three fiber drawing stages and corresponding to a preform, a cane and a HC-PCF;
- Figure 11 is an example simulation of the confinement loss of a HC-PCF (e.g., the fiber shown in Figure 7) as a function of wavelength;
- Figure 12 shows a flowchart of a method of producing photonic crystal fiber (PCF) preforms in accordance with an embodiment;
- Figure 13 shows a flowchart of a method of producing PCFs using preforms produced by the method e.g., as shown in Figure 12, in accordance with an embodiment; and
- Figure 14 depicts a block diagram of a computer system for controlling a broadband radiation source.

DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

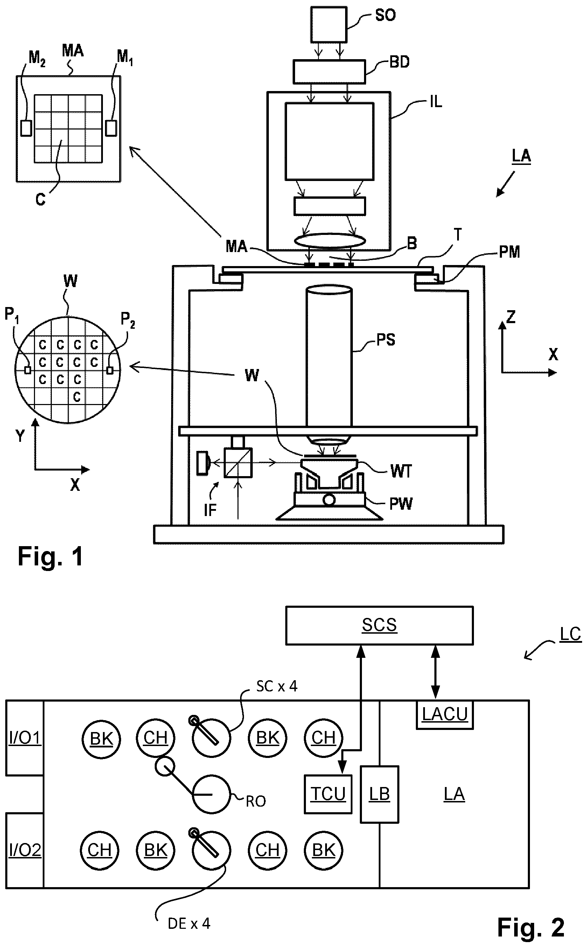

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks PI, P2. Although the substrate alignment marks PI, P2 as illustrated occupy dedicated target portions, they may be located in spaces between target portions. Substrate alignment marks PI, P2 are known as scribe-lane alignment marks when these are located between the target portions C.

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

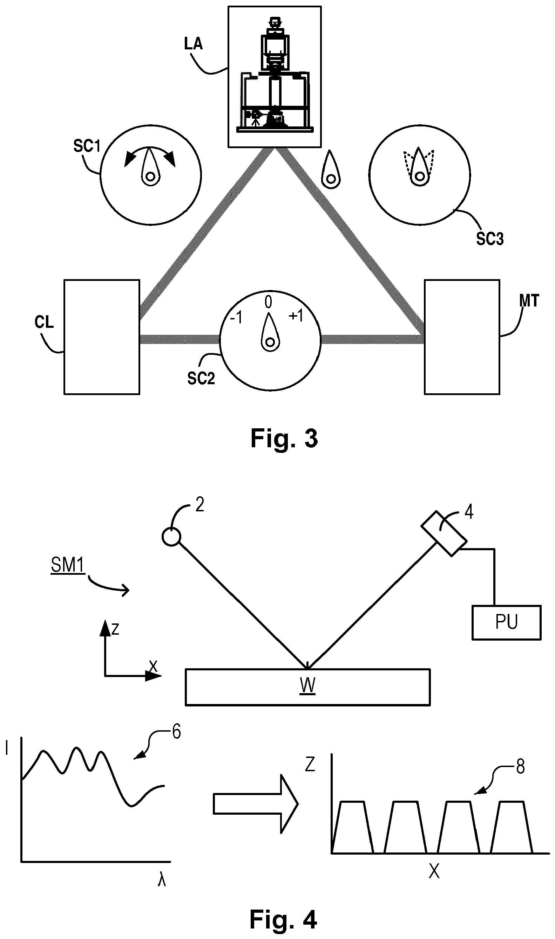

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is an ellipsometric scatterometer. The ellipsometric scatterometer allows for determining parameters of a lithographic process by measuring scattered radiation for each polarization states. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1incorporated herein by reference in its entirety.

A metrology apparatus, such as a scatterometer, is depicted in Figure 4. It comprises a broadband (white light) radiation projector 2 which projects radiation onto a substrate 6. The reflected or scattered radiation is passed to a spectrometer detector 4, which measures a spectrum 10 (i.e. a measurement of intensity as a function of wavelength) of the specular reflected radiation. From this data, the structure or profile giving rise to the detected spectrum may be reconstructed by processing unit PU, e.g. by Rigorous Coupled Wave Analysis and non-linear regression or by comparison with a library of simulated spectra as shown at the bottom of Figure 3. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

Overall measurement quality of a lithographic parameter via measurement of a metrology target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016/0161863 and published US patent application US 2016/0370717A1incorporated herein by reference in its entirety.

Another type of metrology tool used in IC manufacture is a topography measurement system, level sensor or height sensor. Such a tool may be integrated in the lithographic apparatus, for measuring a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

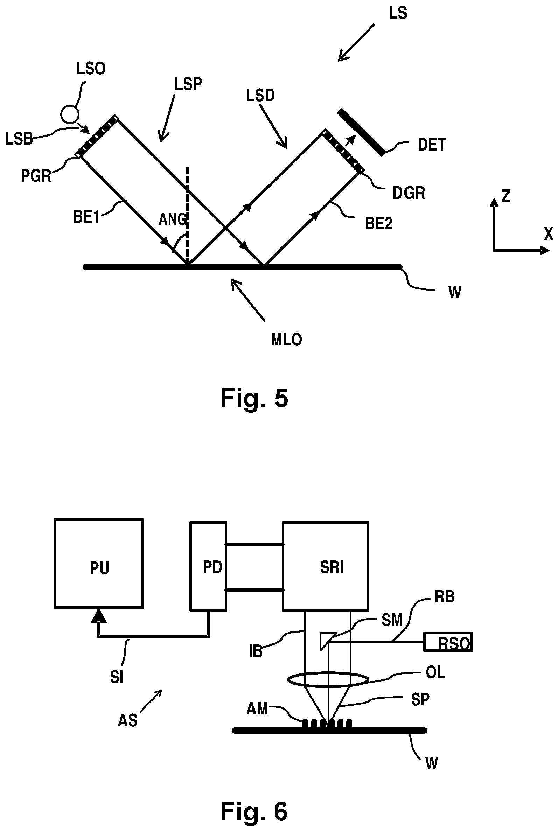

An example of a level or height sensor LS as known in the art is schematically shown in Figure 5, which illustrates only the principles of operation. In this example, the level sensor comprises an optical system, which includes a projection unit LSP and a detection unit LSD. The projection unit LSP comprises a radiation source LSO providing a beam of radiation LSB which is imparted by a projection grating PGR of the projection unit LSP. The radiation source LSO may be, for example, a narrowband or broadband light source, such as a supercontinuum light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as a photodetector, or representative of a spatial distribution of the intensity received, such as a camera. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of measurement beams BE1 onto the surface of the substrate W, thereby generating an array of measurement areas MLO or spots covering a larger measurement range.

Various height sensors of a general type are disclosed for example in US7265364 and US7646471, both incorporated by reference. A height sensor using UV radiation instead of visible or infrared radiation is disclosed in US2010233600A1, incorporated by reference. In WO2016102127A1, incorporated by reference, a compact height sensor is described which uses a multi-element detector to detect and recognize the position of a grating image, without needing a detection grating.

Another type of metrology tool used in IC manufacture is an alignment sensor. A critical aspect of performance of the lithographic apparatus is therefore the ability to place the applied pattern correctly and accurately in relation to features laid down in previous layers (by the same apparatus or a different lithographic apparatus). For this purpose, the substrate is provided with one or more sets of marks or targets. Each mark is a structure whose position can be measured at a later time using a position sensor, typically an optical position sensor. The position sensor may be referred to as "alignment sensor" and marks may be referred to as "alignment marks".

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116. Various enhancements and modifications of the position sensor have been developed, for example as disclosed in US2015261097A1. The contents of all of these publications are incorporated herein by reference.

Figure 6 is a schematic block diagram of an embodiment of a known alignment sensor AS, such as is described, for example, in US6961116, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The illumination spot SP, by which the mark AM is illuminated, may be slightly smaller in diameter than the width of the mark itself.

Radiation diffracted by the alignment mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

The diverting optics, which in this example comprises the spot mirror SM, may also serve to block zero order radiation reflected from the mark, so that the information-carrying beam IB comprises only higher order diffracted radiation from the mark AM (this is not essential to the measurement, but improves signal to noise ratios).

Intensity signals SI are supplied to a processing unit PU. By a combination of optical processing in the block SRI and computational processing in the unit PU, values for X- and Y-position on the substrate relative to a reference frame are output.

A single measurement of the type illustrated only fixes the position of the mark within a certain range corresponding to one pitch of the mark. Coarser measurement techniques are used in conjunction with this to identify which period of a sine wave is the one containing the marked position. The same process at coarser and/or finer levels may be repeated at different wavelengths for increased accuracy and/or for robust detection of the mark irrespective of the materials from which the mark is made, and materials on and/or below which the mark is provided. The wavelengths may be multiplexed and demultiplexed optically so as to be processed simultaneously, and/or they may be multiplexed by time division or frequency division.

In this example, the alignment sensor and spot SP remain stationary, while it is the substrate W that moves. The alignment sensor can thus be mounted rigidly and accurately to a reference frame, while effectively scanning the mark AM in a direction opposite to the direction of movement of substrate W. The substrate W is controlled in this movement by its mounting on a substrate support and a substrate positioning system controlling the movement of the substrate support. A substrate support position sensor (e.g. an interferometer) measures the position of the substrate support (not shown). In an embodiment, one or more (alignment) marks are provided on the substrate support. A measurement of the position of the marks provided on the substrate support allows the position of the substrate support as determined by the position sensor to be calibrated (e.g. relative to a frame to which the alignment system is connected). A measurement of the position of the alignment marks provided on the substrate allows the position of the substrate relative to the substrate support to be determined.

Metrology tools MT, such as a scatterometer, topography measurement system, or position measurement system mentioned above may use radiation originating from a radiation source to perform a measurement. The properties of the radiation used by a metrology tool may affect the type and quality of measurements that may be performed. For some applications, it may be advantageous to use multiple radiation frequencies to measure a substrate, for example broadband radiation may be used. Multiple different frequencies may be able to propagate, irradiate, and scatter off a metrology target with no or minimal interference with other frequencies. Therefore different frequencies may for example be used to obtain more metrology data simultaneously. Different radiation frequencies may also be able to interrogate and discover different properties of a metrology target. Broadband radiation may be useful in metrology systems MT such as for example level sensors, alignment mark measurement systems, scatterometry tools, or inspection tools. A broadband radiation source may be a supercontinuum source.

High quality broadband radiation, for example supercontinuum radiation, may be difficult to generate. One method for generating broadband radiation may be to broaden high-power narrow band or single frequency input radiation or pump radiation, for example making use of non-linear, higher order effects. The input radiation (which may be produced using a laser) may be referred to as pump radiation. Alternatively, the input radiation may be referred to as seed radiation. To obtain high power radiation for broadening effects, radiation may be confined into a small area so that strongly localised high intensity radiation is achieved. In those areas, the radiation may interact with broadening structures and/or materials forming a non-linear medium so as to create broadband output radiation. In the high intensity radiation areas, different materials and/or structures may be used to enable and/or improve radiation broadening by providing a suitable non-linear medium.

In some implementations, the broadband output radiation is created in a photonic crystal fiber (PCF). In several embodiments, such a photonic crystal fiber has microstructures around its fiber core assisting in confining radiation that travels through the fiber in the fiber core. The fiber core can be made of a solid material that has non-linear properties and that is capable of generating broadband radiation when high intensity pump radiation is transmitted through the fiber core. Although it is feasible to generate broadband radiation in solid core photonic crystal fibers, there may be a few disadvantages of using a solid material. For example, if UV radiation is generated in the solid core, this radiation might not be present in the output spectrum of the fiber because the radiation is absorbed by most solid material.

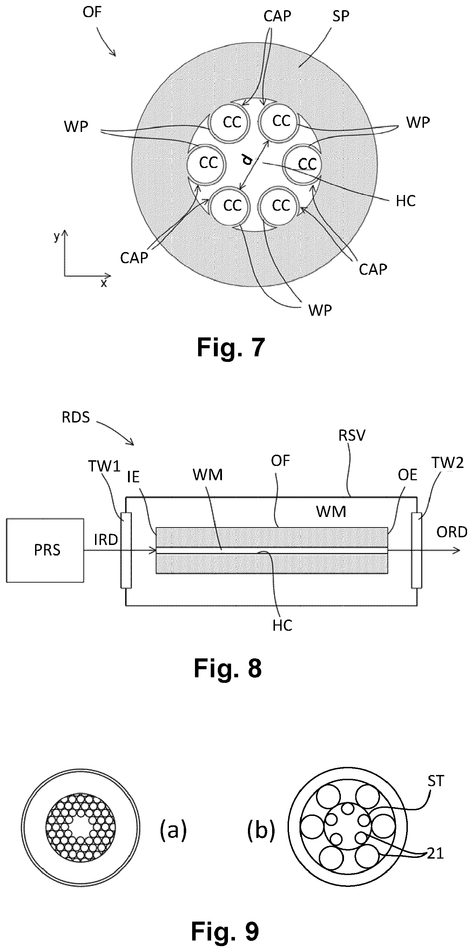

In some implementations, as discussed further below with reference to Figure 8, methods and apparatus for broadening input radiation may use a fiber for confining input radiation, and for broadening the input radiation to output broadband radiation. The fiber may be a hollow core fiber, and may comprise internal structures to achieve effective guiding and confinement of radiation in the fiber. The fiber may be a hollow core photonic crystal fiber (HC-PCF), which is particularly suitable for strong radiation confinement, predominantly inside the hollow core of the fiber, achieving high radiation intensities. The hollow core of the fiber may be filled with a gas acting as a broadening medium for broadening input radiation. Such a fiber and gas arrangement may be used to create a supercontinuum radiation source. Radiation input to the fiber may be electromagnetic radiation, for example radiation in one or more of the infrared, visible, UV, and extreme UV spectra. The output radiation may consist of or comprise broadband radiation, which may be referred to herein as white light.

Some embodiments relate to a new design of such a broadband radiation source comprising an optical fiber. The optical fiber is a hollow-core, photonic crystal fiber (HC-PCF). In particular, the optical fiber may be a hollow-core, photonic crystal fiber of a type comprising anti-resonant structures for confinement of radiation. Such fibers comprising anti-resonant structures are known in the art as anti-resonant fibers, tubular fibers, single-ring fibers, negative curvature fibers or inhibited coupling fibers. Various different designs of such fibers are known in the art. Alternatively, the optical fiber may be photonic bandgap fibers (HC-PBFs, for example a Kagome fiber).

A number of types of HC-PCFs can be engineered, each based on a different physical guidance mechanism. Two such HC-PCFs include: hollow-core photonic bandgap fibers (HC-PBFs) and hollow-core anti-resonant reflecting fibers (HC-ARFs). Detail on the design and manufacture of HC-PCFs can be found in US patent US2004/015085A1 (for HC-PBFs) and International PCT patent application WO2017/032454A1 (for Hollow Core anti-resonant reflecting fibers), which are incorporated herein by reference. Figure 9(a) shows a Kagome fiber, comprising a Kagome lattice structure.

An example of an optical fiber for use in the radiation source is now described with reference to Figure 7, which is a schematic cross sectional view of the optical fiber OF in a transverse plane. Further embodiments similar to the practical example of the fiber of Figure 7 are disclosed in WO2017/032454A1.

The optical fiber OF comprises an elongate body, which is longer in one dimension compared to the other two dimensions of the fiber OF. This longer dimension may be referred to as an axial direction and may define an axis of the optical fiber OF. The two other dimensions define a plane which may be referred to as a transverse plane. Figure 7 shows a cross-section of the optical fiber OF in this transverse plane (i.e. perpendicular to the axis), which is labelled as the x-y plane. The transverse cross-section of the optical fiber OF may be substantially constant along the fiber axis.

It will be appreciated that the optical fiber OF has some degree of flexibility and therefore the direction of the axis will not, in general, be uniform along the length of the optical fiber OF. The terms such as the optical axis, the transverse cross-section and the like will be understood to mean the local optical axis, the local transverse cross-section and so on. Furthermore, where components are described as being cylindrical or tubular these terms will be understood to encompass such shapes that may have been distorted as the optical fiber OF is flexed.

The optical fiber OF may have any length and it will be appreciated that the length of the optical fiber OF may be dependent on the application. The optical fiber OF may have a length between 1 centimeter (cm) and 10 meter (m), for example, the optical fiber OF may have a length between 10 cm and 100 cm.

The optical fiber OF comprises: a hollow core HC; a cladding portion surrounding the hollow core HC; and a support portion SP surrounding and supporting the cladding portion. The optical fiber OF may be considered to comprise a body (comprising the cladding portion and the support portion SP) having a hollow core HC. The cladding portion comprises a plurality of anti-resonance elements for guiding radiation through the hollow core HC. In particular, the plurality of anti-resonance elements are arranged to confine radiation that propagates through the optical fiber OF predominantly inside the hollow core HC and to guide the radiation along the optical fiber OF. The hollow core HC of the optical fiber OF may be disposed substantially in a central region of the optical fiber OF, so that the axis of the optical fiber OF may also define an axis of the hollow core HC of the optical fiber OF.

The cladding portion comprises a plurality of anti-resonance elements for guiding radiation propagating through the optical fiber OF. In particular, in this embodiment, the cladding portion comprises a single ring of six tubular capillaries CAP. Each of the tubular capillaries CAP acts as an anti-resonance element.

The capillaries CAP may also be referred to as tubes. The capillaries CAP may be circular in cross section, or may have another shape. Each capillary CAP comprises a generally cylindrical wall portion WP that at least partially defines the hollow core HC of the optical fiber OF and separates the hollow core HC from a capillary cavity CC. It will be appreciated that the wall portion WP may act as an anti-reflecting Fabry-Perot resonator for radiation that propagates through the hollow core HC (and which may be incident on the wall portion WP at a grazing incidence angle). The thickness of the wall portion WP may be suitable so as to ensure that reflection back into the hollow core HC is generally enhanced whereas transmission into the capillary cavity CC is generally suppressed. In some embodiments, the capillary wall portion WP may have a thickness between 0.01 - 10.0 μm.

It will be appreciated that, as used herein, the term cladding portion is intended to mean a portion of the optical fiber OF for guiding radiation propagating through the optical fiber OF (i.e. the capillaries CAP which confine said radiation within the hollow core HC). The radiation may be confined in the form of transverse modes, propagating along the fiber axis.

The support portion is generally tubular and supports the six capillaries CAP of the cladding portion. The six capillaries CAP are distributed evenly around an inner surface if the inner support portion SP. The six capillaries CAP may be described as being disposed in a generally hexagonal formation.

The capillaries CAP are arranged so that each capillary is not in contact with any of the other capillaries CAP. Each of the capillaries CAP is in contact with the inner support portion SP and spaced apart from adjacent capillaries CAP in the ring structure. Such an arrangement may be beneficial since it may increase a transmission bandwidth of the optical fiber OF (relative, for example, to an arrangement wherein the capillaries are in contact with each other). Alternatively, in some embodiments, each of the capillaries CAP may be in contact with adjacent capillaries CAP in the ring structure.

The six capillaries CAP of the cladding portion are disposed in a ring structure around the hollow core HC. An inner surface of the ring structure of capillaries CAP at least partially defines the hollow core HC of the optical fiber OF. The diameter d of the hollow core HC (which may be defined as the smallest dimension between opposed capillaries, indicated by arrow d) may be between 10 and 1000 μm. The diameter d of the hollow core HC may affect the mode field diameter, impact loss, dispersion, modal plurality, and non-linearity properties of the hollow core HC optical fiber OF.

In this embodiment, the cladding portion comprises a single ring arrangement of capillaries CAP (which act as anti-resonance elements). Therefore, a line in any radial direction from a center of the hollow core HC to an exterior of the optical fiber OF passes through no more than one capillary CAP.

It will be appreciated that other embodiments may be provided with different arrangements of anti-resonance elements. These may include arrangements having multiple rings of anti-resonance elements and arrangements having nested anti-resonance elements. Figure 9(a) shows an embodiment of HC-PCFs with three rings of capillaries CAP stacking on top of each other along the radial direction. In this embodiment, each capillary CAP is in contact with other capillaries both in the same ring and in a different ring. Furthermore, although the embodiment shown in Figure 7 comprises a ring of six capillaries, in other embodiments, one or more rings comprising any number of anti-resonance elements (for example 4, 5, 6, 7, 8, 9, 10, 11 or 12 capillaries) may be provided in the cladding portion.

Figure 9(b) shows a modified embodiment of the above discussed HC-PCFs with a single ring of tubular capillaries. In the example of Figure 9(b) there are two coaxial rings of tubular capillaries 21. For holding the inner and outer rings of tubular capillaries 21, a support tube ST may be included in the HC-PCF. The support tube may be made of silica.

The tubular capillaries of the examples of Figure 7 and Figures 9 (a) and (b) may have a circular cross-sectional shape. Other shapes are also possible for the tubular capillaries, like elliptical or polygonal cross-sections. Additionally, the solid material of the tubular capillaries of the examples of Figure 7 and Figures 9 (a) and (b) may comprise plastic material, like PMA, glass, like silica, or soft glass.

Figure 8 depicts a radiation source RDS for providing broadband output radiation. The radiation source RDS comprises a pulsed pump radiation source PRS or any other type of source that is capable of generating short pulses of a desired length and energy level; an optical fiber OF (for example of the type shown in Figure 7) with a hollow core HC; and a working medium WM (for example a gas) disposed within the hollow core HC. Although in Figure 8 the radiation source RDS comprises the optical fiber OF shown in Figure 7, in alternative embodiments other types of hollow core HC optical fiber OF may be used.

The pulsed pump radiation source PRS is configured to provide input radiation IRD. The hollow core HC of the optical fiber OF is arranged to receive the input radiation IRD from the pulsed pump radiation source PRS, and broaden it to provide output radiation ORD. The working medium WM enables the broadening of the frequency range of the received input radiation IRD so as to provide broadband output radiation ORD.

The radiation source RDS further comprises a reservoir RSV. The optical fiber OF is disposed inside the reservoir RSV. The reservoir RSV may also be referred to as a housing, container or gas cell. The reservoir RSV is configured to contain the working medium WM. The reservoir RSV may comprise one or more features, known in the art, for controlling, regulating, and/or monitoring the composition of the working medium WM (which may be a gas) inside the reservoir RSV. The reservoir RSV may comprise a first transparent window TW1. In use, the optical fiber OF is disposed inside the reservoir RSV such that the first transparent window TW1 is located proximate to an input end IE of the optical fiber OF. The first transparent window TW1 may form part of a wall of the reservoir RSV. The first transparent window TW1 may be transparent for at least the received input radiation frequencies, so that received input radiation IRD (or at least a large portion thereof) may be coupled into the optical fiber OF located inside reservoir RSV. It will be appreciated that optics (not shown) may be provided for coupling the input radiation IRD into the optical fiber OF.

The reservoir RSV comprises a second transparent window TW2, forming part of a wall of the reservoir RSV.

In use, when the optical fiber OF is disposed inside the reservoir RSV, the second transparent window TW2 is located proximate to an output end OE of the optical fiber OF. The second transparent window TW2 may be transparent for at least the frequencies of the broadband output radiation ORD of the apparatus 120.

Alternatively, in another embodiment, the two opposed ends of the optical fiber OF may be placed inside different reservoirs. The optical fiber OF may comprise a first end section configured to receive input radiation IRD, and a second end section for outputting broadband output radiation ORD. The first end section may be placed inside a first reservoir, comprising a working medium WM. The second end section may be placed inside a second reservoir, wherein the second reservoir may also comprise a working medium WM. The functioning of the reservoirs may be as described in relation to Figure 8 above. The first reservoir may comprise a first transparent window, configured to be transparent for input radiation IRD. The second reservoir may comprise a second transparent window configured to be transparent for broadband output broadband radiation ORD. The first and second reservoirs may also comprise a sealable opening to permit the optical fiber OF to be placed partially inside and partially outside the reservoir, so that a gas can be sealed inside the reservoir. The optical fiber OF may further comprise a middle section not contained inside a reservoir. Such an arrangement using two separate gas reservoirs may be particularly convenient for embodiments wherein the optical fiber OF is relatively long (for example when the length is more than 1 m). It will be appreciated that for such arrangements which use two separate gas reservoirs, the two reservoirs (which may comprise one or more features, known in the art, for controlling, regulating, and/or monitoring the composition of a gas inside the two reservoirs) may be considered to provide an apparatus for providing the working medium WM within the hollow core HC of the optical fiber OF.

In this context a window may be transparent for a frequency if at least 50%, 75%, 85%, 90%, 95%, or 99% of incident radiation of that frequency on the window is transmitted through the window.

Both the first TW1 and the second TW2 transparent windows may form an airtight seal within the walls of the reservoir RSV so that the working medium WM (which may be a gas) may be contained within the reservoir RSV. It will be appreciated that the gas WM may be contained within the reservoir RSV at a pressure different to the ambient pressure of the reservoir RSV.

The working medium WM may comprise a noble gas such as Argon, Krypton, and Xenon, a Raman active gas such as Hydrogen, Deuterium and Nitrogen, or a gas mixture such as an Argon/Hydrogen mixture, a Xenon/Deuterium mixture, a Krypton/Nitrogen mixture, or a Nitrogen/Hydrogen mixture. Depending on the type of filling gas, the nonlinear optical processes can include modulational instability (MI), soliton self-compression, soliton fission, Kerr effect, Raman effect and dispersive wave generation (DWG), details of which are described in WO2018/127266A1 and US9160137B1 (both of which are hereby incorporated by reference). Since the dispersion of the filling gas can be tuned by varying the working medium WM pressure in the reservoir RSR (i.e. gas cell pressure), the generated broadband pulse dynamics and the associated spectral broadening characteristics can be adjusted so as to optimize the frequency conversion

In one implementation, the working medium WM may be disposed within the hollow core HC at least during receipt of input radiation IRD for producing broadband output radiation ORD. It will be appreciated that, while the optical fiber OF is not receiving input radiation IRD for producing broadband output radiation, the gas WM may be wholly or partially absent from the hollow core HC.

In order to achieve frequency broadening high intensity radiation may be desirable. An advantage of having a hollow core HC optical fiber OF is that it may achieve high intensity radiation through strong spatial confinement of radiation propagating through the optical fiber OF, achieving high localised radiation intensities. The radiation intensity inside the optical fiber OF may be high, for example due to high received input radiation intensity and/or due to strong spatial confinement of the radiation inside the optical fiber OF. An advantage of hollow core optical fibers is that they can guide radiation having a broader wavelength range that solid-core fibers and, in particular, hollow core optical fibers can guide radiation in both the ultraviolet and infrared ranges.

An advantage of using a hollow core HC optical fiber OF may be that the majority of the radiation guided inside the optical fiber OF is confined to the hollow core HC. Therefore, the majority of the interaction of the radiation inside the optical fiber OF is with the working medium WM, which is provided inside the hollow core HC of the optical fiber OF. As a result, the broadening effects of the working medium WM on the radiation may be increased.

The received input radiation IRD may be electromagnetic radiation. The input radiation IRD may be received as pulsed radiation. For example, the input radiation IRD may comprise ultrafast pulses, for example, generated by a laser.

The input radiation IRD may be coherent radiation. The input radiation IRD may be collimated radiation, an advantage of which may be to facilitate and improve the efficiency of coupling the input radiation IRD into the optical fiber OF. The input radiation IRD may comprise a single frequency, or a narrow range of frequencies. The input radiation IRD may be generated by a laser. Similarly, the output radiation ORD may be collimated and/or may be coherent.

The broadband range of the output radiation ORD may be a continuous range, comprising a continuous range of radiation frequencies. The output radiation ORD may comprise supercontinuum radiation. Continuous radiation may be beneficial for use in a number of applications, for example in metrology applications. For example, the continuous range of frequencies may be used to interrogate a large number of properties. The continuous range of frequencies may for example be used to determine and/or eliminate a frequency dependency of a measured property. Supercontinuum output radiation ORD may comprise for example electromagnetic radiation over a wavelength range of 100 nm - 4000 nm. The broadband output radiation ORD frequency range may be for example 400 nm - 900 nm, 500 nm - 900 nm, or 200 nm - 2000 nm. The supercontinuum output radiation ORD may comprise white light.

The input radiation IRD provided by the pulsed pump radiation source PRS may be pulsed. The input radiation IRD may comprise electromagnetic radiation of one or more frequencies between 200 nm and 2 $\mu$m. The input radiation IRD may for example comprise electromagnetic radiation with a wavelength of 1.03 $\mu$m. The repetition rate of the pulsed radiation IRD may be of an order of magnitude of 1 kHz to 100 MHz. The pulse energies may have an order of magnitude of 0.1 $\mu$J to 100 $\mu$J, for example 1 - 10 $\mu$J. A pulse duration for the input radiation IRD may be between 10 fs and 10 ps, for example 300 fs. The average power of input radiation IRD may be between 100 mW to several 100 W. The average power of input radiation IRD may for example be 20 - 50 W.

The pulsed pump radiation source PRS may be a laser. The spatio-temporal transmission characteristics of such a laser pulse, e.g. its spectral amplitude and phase, transmitted along the optical fiber OF can be varied and tuned through adjustment of (pump) laser parameters, working component WM variations, and optical fiber OF parameters. Said spatio-temporal transmission characteristics may include one or more of: output power, output mode profile, output temporal profile, width of the output temporal profile (or output pulse width), output spectral profile, and bandwidth of the output spectral profile (or output spectral bandwidth). Said pulsed pump radiation source PRS parameters may include one or more of: pump wavelength, pump pulse energy, pump pulse width, pump pulse repetition rate. Said optical fiber OF parameters may include one or more of: optical fiber length, size and shape of the hollow core HC, size and shape of the capillaries, thickness of the walls of the capillaries surrounding the hollow core HC. Said working component WM, e.g. filling gas, parameters may include one or more of: gas type, gas pressure and gas temperature.

The broadband output radiation ORD provided by the radiation source RDS may have an average output power of at least 1 W. The average output power may be at least 5 W. The average output power may be at least 10 W. The broadband output radiation ORD may be pulsed broadband output radiation ORD. The broadband output radiation ORD may have a power spectral density in the entire wavelength band of the output radiation of at least 0.01 mW/nm. The power spectral density in the entire wavelength band of the broadband output radiation may be at least 3 mW/nm.

Similar to other types of specialty fiber such as solid-core PCFs (SC-PCFs), hollow core PCFs (HC-PCFs) may also be manufactured by the conventional manufacturing process which comprises the following three major stages.

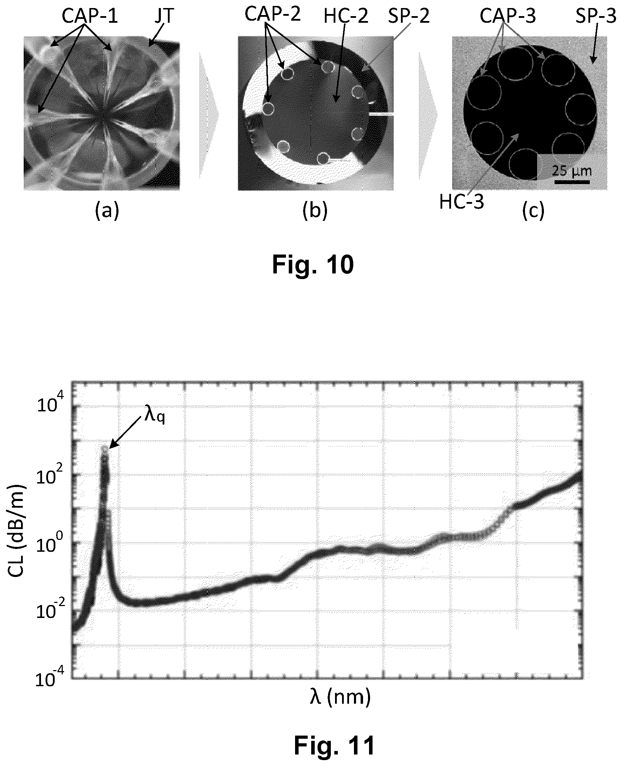

In stage 1, a PCF preform is produced. According to an example method (so-called stack-and-draw technique), (pure silica) preform capillaries and spacers are first stacked together to form a stacked assembly. The stacked assembly is inserted into a large jacket tube (e.g., with a diameter of several centimeters) to form a preform. The gaps between the stacked assembly and the jacket tube may be filled with for example silica rods of various outer diameters. Figure 10(a) shows a transverse cross section image of an example preform. As shown in the figure, the example preform is formed by inserting a stacked assembly comprising seven (or other number of) preform capillaries CAP-1 and other elements such as spacers (not shown) into a jacket tube JT. In some cases, the spacers may be in the form of rods or posts. In some cases, the spacers may be made of the same material as the preform capillaries.

According to another example method, instead of inserting a stack of preform capillaries into the jacket tube JT, the preform capillaries CAP-1 are individually and sequentially inserted into the jacket tube JT. In this example method, the jacket tube JT is held horizontally. Each of the preform capillaries CAP-1 is inserted into the jacket tube JT via one of its ends. Once inserted, the preform capillary CAP-1 sits at the bottom of the jacket tube JT. Then, the preform capillary CAP-1 is fixed to the inner wall of the jacket tube JT, for example by fusing or melting. Then, the jacket tube JT is rotated by a predefined angle (e.g., 60°) so as to allow a next preform capillary CAP-1 to be inserted at the bottom of the jacket tube JT. Such an inserting, fixing and rotating process is repeated until all the preform capillaries are inserted and fixed to the inner wall of the jacket tube JT.

Note that the capillaries used in this stage are typically drawn down from commercially available glass tubes in a separate drawing process, which may also be considered as one manufacturing stage. The preform may have an outer diameter of e.g., between 10 mm - 100 mm and a length of e.g., between 0.3 m and 2 m, e.g., about 1 m.

In stage two, the preform is held at the top of a conventional optical fiber drawing tower where the preform is fed downward into a furnace (e.g., graphite resistance furnace) so as to heat a lower section of the preform. The heated region of the preform softens and elongates with a teardrop-shaped drip which pulls the fiber downward (also known as drop-off). Additional pulling and tension control is used to ensure the preform is drawn to a cane. Typically, a one-meter long preform can be drawn to a 10 m - 1000 m long cane. Such a long cane is then cut into shorter pieces each with a length of e.g., between 0.5 m and 2 m, e.g., about 1 m. Figure 10(b) shows a transverse cross section image of an example cane that is drawn from the example preform shown in Figure 10(a). The example cane comprises seven capillaries CAP-2 which surround a hollow core HC-2 and that are supported by a support portion SP-2. Although the example cane looks more like a final HC-PCF (or a target HC-PCF), it is rigid and its physical dimensions (e.g., capillary dimensions, support portion diameter) are all larger than those of the final HC-PCF. At the end of stage two, the cane may have an outer dimeter of e.g., between 0.5 mm - 10 mm, and the cane capillaries CAP-2 that surround the hollow core HC of the cane may each have an outer diameter of e.g., between 100 $\mu$m - 1000 $\mu$m and a wall portion thickness of e.g., between 1 $\mu$m - 100 $\mu$m.

In stage three, each cane obtained in stage two is then taken to another conventional drawing tower suitable-equipped to draw HC-PCF and the cane is drawn to the final HC-PCF with target dimensions. Typically, a one-meter long cane can be drawn to 100s of meters of fibers in a continuous manner. In its final form, the outer diameter of the HC-PCF may be reduced to e.g., between 100 $\mu$m - 300 $\mu$m. In contrast with stage two, the fiber drawing process carried out in stage three additionally requires the cane to be connected to a pressure supply which is used to pressurize the internal structures of the cane so as to cause each of the capillaries to inflate in a desired and controlled manner. By carefully tuning the relative pressure between different parts (e.g., the capillary cavities CC and hollow core HC) of the internal structures of the cane, the cane capillaries CAP-2 are inflated and as such their outer diameter is increased with respect to the inner diameter of the support portion SP-2. This effect is evident by comparing the two transverse cross section images shown respectively in Figure 10(b) and Figure 10(c), wherein the drawn fiber shown in Figure 10(c) has a higher ratio of the outer diameter of each capillary CAP-3 over the inner diameter of the support portion SP-3. At the end of stage three, the outer diameter of the capillaries CAP-3 may be increased to e.g., between 10 $\mu$m - 50 $\mu$m and correspondingly the thickness of the capillary wall portions WP may be reduced to e.g., 0.05 $\mu$m - 1 $\mu$m. The positive pressure difference between each capillary cavity CC and the hollow core HC may range between 1 millibar (mbar) and 1000 mbar.

As described above, the plurality of anti-resonance elements of a HC-PCF (e.g., a single ring arrangement of glass capillaries CAP as shown in Figure 7) are used for guiding radiation propagating through the fiber. The light guiding effect is established by anti-resonant interference (an inverse Fabry-Perot effect) at the glass-air boundary and is strongest at the regions of the capillary wall portions WP that are facing the core. In hollow-core negative curvature fibers (e.g., HC-PCFs), the total fiber loss is influenced by both the mode confinement loss and material loss. The confinement loss is loss arising from the leaky nature of the modes and the non-perfect structure of the HC-PCF whereas the material loss results from light absorption in the fiber material. Importantly, the confinement loss of a HC-PCF is strongly influenced by the thickness of the capillary wall portions WP. Specifically, the wall thickness forms resonances, at which the light leaks out of the capillaries CAP. The resonance positions $\lambda_q$ can be estimated by

$$\lambda_q = \frac{2t}{q}\sqrt{n_g^2 - 1}, \qquad\qquad [1]$$

where $q$ is a positive integer (the resonance order), $t$ is the nominal wall thickness and $n_g$ is the refractive index of the glass (e.g., $n_g \sim 1.45$ for silica glass).

Figure 11 shows an example simulation of the confinement loss of a HC-PCF as a function of wavelength. As can be seen in the figure, there is a sharp resonance feature peaked at $\lambda_q$. Such a sharp resonance feature results in a significant increase of the confinement loss by more than three orders of magnitude with respect to e.g., wavelengths adjacent to the resonance.

Because of geometrical variations of the raw material and of process errors during drawing, the capillaries are not perfect in their dimensions, which include aspects such as capillary outer diameter, capillary wall thickness, capillary concentricity, and capillary bow. In state-of-the-art fiber drawing facilities, the outer diameter is monitored as a function of capillary length. And the best-matching capillaries are cherry-picked for preform assembly in a post-processing step. However, measurement of the wall thickness is more challenging because standard logging devices (e.g., based on optical shadow measurements) are not capable of assessing the wall thickness. Without accurate measurement of the wall thickness, the existing preform making process lacks control over the wall thicknesses of the capillaries to be used for making a preform. Consequently, there may be a large spread in the wall thicknesses of the capillaries of the preform and thereby the resultant HC-PCF.

The HC-PCF having dissimilar or non-uniform thicknesses of capillary wall portions WP leads to a broadened resonance peak rather than a sharp peak (e.g., as shown in Figure 11), resulting in an undesirable overlap with the generated broadband spectrum. In case where the broadband spectrum is deliberately chosen to extend into the UV (e.g., 200 nm -900 nm), a broad resonance negatively impacts conversion efficiency from the input radiation IRD into the wavelength region below the resonance. In this case, a more-powerful pump laser would be required to maintain a desired or useful power level in the corresponding wavelength region, thereby resulting in a higher equipment cost and often a larger system footprint. In addition, the wall thickness of individual capillaries should not be significantly smaller than required, since this would drastically increase the confinement loss especially at longer wavelengths (e.g., wavelengths longer than 1000 nm).

As described above, during fabrication of the final HC-PCF, the cane capillaries CAP-2 are effectively inflated by an overpressure relative to the hollow core region, to reach their target dimensions (e.g., -10-25 um in diameter at fiber level). It is of vital importance that the cane capillaries CAP-2 are inflated in a desired manner, because 1) the capillary size (e.g., the outer diameter of each capillary) sets the size of the inscribed core which impacts the generated broadband output radiation ORD; 2) the thickness of the capillary wall portions WP determines resonance wavelengths and should ideally correspond to wavelengths falling outside the spectrum of the output radiation ORD; 3) the ratio between the capillary outer diameter and the hollow core diameter determines the light-guiding performance of the fiber.

The inventors have found that in stage three of the above-described manufacturing process, the inflation rate of a cane capillary CAP-2 is strongly determined by the wall thickness of the capillary CAP-2: the thinner the capillary wall, the higher the inflation rate and the higher the sensitivity to process variations. Consequently, it is difficult to obtain a final HC-PCF with equal or similar capillary diameters when the cane capillaries CAP-2 have dissimilar wall thicknesses. Using HC-PCFs with dissimilar capillary diameters would lead to deteriorated output performance. By way of example, a $\pm$ 5% change in capillary diameter would result in a $\pm$ 5% change in output PSD. Moreover, drawing a final HC-PCF from a cane whose capillaries CAP-2 have dissimilar wall thicknesses and therefore dissimilar inflation rates can negatively impact the yield. For example, if one capillary has a larger inflation rate than the others, this capillary may touch its nearest neighbor, thereby compromising the fiber structure and rendering the draw not usable.

It is therefore the object of the present invention to mitigate at least some of the aforementioned issues (e.g., output spectrum being impacted by a broad fiber resonance, output performance or yield being deteriorated by variations in capillary diameters or inflation rates fiber fabrication). The inventors have found that the issues can be mitigated if the variation in the wall thicknesses of the capillaries of a PCF preform is better controlled or reduced. The inventors have also found that the requirement of a better consistency or a smaller variation in the wall thicknesses of the preform capillaries does not have to be applied to the entire circumference of each constituent capillary but can instead be applied only to the portion facing the core region of the fiber. To be able to evaluate the wall thickness variation, it is necessary to accurately measure the wall thickness of every capillary along its circumference and over the length of the fiber. Note that the distribution of wall thickness along the circumference of a capillary is also known as the azimuthal distribution of wall thickness of the capillary.

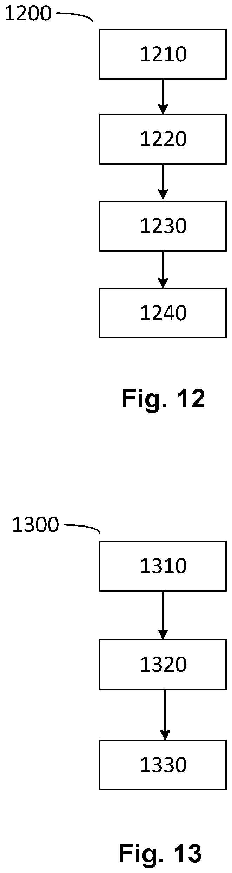

Based on these findings, the inventors propose a method of producing photonic crystal fiber (PCF) preforms. With reference to Figure 12, the proposed method 1200 may comprise for example the following five main steps.

Step 1210: obtaining a plurality of preform capillaries (e.g., the capillaries CAP-1 shown in Figure 10(a)). The plurality of preform capillaries may be obtained by drawing down a plurality of larger and thicker glass tubes using the conventional thermal drawing method. In comparison with final (or target) PCT capillaries, preform capillaries have much larger diameters and wall thicknesses. Each of the preform capillaries may have a diameter e.g., between 0.5 mm and 20 mm and a wall thickness e.g., between 50 $\mu$m and 1000 $\mu$m.

Step 1220: measuring the wall thickness of each of the plurality of preform capillaries along at least a portion of its entire circumference. The at least a portion of a capillary's circumference may be for example at least 25%, at least 50%, at least 70%, at least 90%, or a majority or all of the circumference. The wall thickness of a capillary may be measured by an optical measuring device. In an embodiment, the measurement may be performed, either sequentially or in parallel, at a plurality of (azimuthal) locations along the circumference of the capillary. The plurality of (azimuthal) locations may be for example at least 3, at least 5, at least 10, at least 20, or at least 50 different locations along the circumference of the capillary. At each measurement location, a wall thickness value may be obtained. The minimum angular difference between two immediate neighboring measurement locations (or azimuthal angular resolution) may be limited by the measurement setup, e.g., the type and resolution of the measuring device, the physical arrangement of the measurement setup. The azimuthal angular resolution may be for example, less than 40°, less than 30°, less than 20°, less than 10°, less than 5°, or less than 1°.

In an embodiment, the wall thickness of each preform capillary may be measured by means of an interferometric optical sensor (e.g a tube measurement system such as marketed by Nirox). In an embodiment, step 1220 may comprise measuring the wall thickness at a plurality of axial positions along at least a portion of the full length of each preform capillary. In comparison with the conventional wide-field microscopy based measurement method where only the end facets of a capillary are inspected and measured, the interferometry based measurement method allows a capillary to be inspected and measured over any predefined length or the full length. For example, the tube measurement systems are known which allow a preform capillary to be optically scanned over its entire length.

In an embodiment, step 1220 may further comprise generating a set of azimuthal-resolved wall thickness data for each of the plurality of axial positions. In an embodiment, the azimuthal resolved wall thickness data may comprise a plurality of angle-thickness pairs, each corresponding to a data point obtained at one measurement location along the circumference of the capillary. In an embodiment, each set of azimuthal-resolved wall thickness data may be represented by a polar plot showing the wall thickness distribution along the circumference at one axial position.

Step 1230: selecting a number of preform capillaries from the plurality of preform capillaries at least based on a thickness criterion, the thickness criterion being that the wall thickness along at least a circumferential portion of a preform capillary varies from a nominal wall thickness by no more than a maximum thickness variation. A circumferential portion of a preform capillary is a wall portion having a certain length along the circumferential direction.

The at least a circumferential portion may cover for example at least 10%, at least 25%, at least 40%, or at least 50% of the circumference. The nominal wall thickness may be for example less than 200 $\mu$m, less than 180 $\mu$m,

less than 160 μm, less than 140 μm, less than 120 μm, or less than 100 μm. The maximum thickness variation is the absolute value of the maximum percentage difference between the measured wall thickness and the nominal wall thickness. The maximum thickness variation may be for example less than 15%, less than 10%, less than 5%, or less than 1%. The combination of a given nominal wall thickness and a given maximum thickness variation defines a wall thickness range having a maximum thickness value and a minimum thickness value. By way of example, a maximum thickness variation of 10% and a nominal wall thickness of 200 μm define a wall thickness range having a maximum thickness value of 180 μm, calculated from (100% - 10%) * 200 μm, and a minimum thickness value of 220 μm, calculated from (100% + 10%) * 200 μm.

In an embodiment, the nominal wall thickness may be determined prior to carrying out the method.

In an embodiment, the nominal wall thickness may be determined based on the measured wall thicknesses of the plurality of preform capillaries. In an embodiment, the determination of the nominal wall thickness may comprise obtaining an overall average wall thickness by averaging the measured wall thicknesses over the plurality of preform capillaries. The determined overall average wall thickness may subsequently be used as the nominal wall thickness. Determining an overall average wall thickness may comprise, for example, determining a per-capillary average wall thickness for each preform capillary and averaging these per-capillary average wall thicknesses. Determining a per-capillary average wall thickness may comprise determining one or more circumferentially averaged wall thickness values per each preform capillary, each circumferentially averaged wall thickness value being obtained by averaging the wall thicknesses measured along the at least a portion of the circumference of the preform capillary at a respective axial position. The circumferentially averaged wall thickness values can then be averaged per capillary to obtain, per capillary, said per-capillary average wall thickness or averaged over all axial positions of all the capillaries to directly determine the overall average wall thickness.

In an embodiment, step 1230 may comprise identifying for each preform capillary a wall portion within which the measured thicknesses vary from the nominal wall thickness by no more than the maximum thickness variation. In an embodiment, step 1230 may further comprise determining for each preform capillary whether the identified wall portion covers a desired percentage of the circumference of the corresponding preform capillary. Such identification steps may be carried out using the measured thickness data, e.g., the azimuthal-resolved wall thickness data. For example, for each capillary, one or more sets of azimuthal-resolved wall thickness data (each set obtained at one axial position) may be used for the identification of the wall portion. When more than one set of azimuthal-resolved wall thickness data is used, the wall thicknesses measured at the same azimuthal location but different axial positions may be averaged to generate an average thickness value for the corresponding azimuthal location.

Step 1240, placing the selected preform capillaries in a glass tube (or jacket tube) to form a PCF preform; wherein the selected preform capillaries are oriented such that the portion of each of the selected preform capillaries, within which the measured wall thicknesses vary from the nominal wall thickness by no more than the maximum thickness variation, faces the longitudinal axis of the glass tube, said glass tube being symmetrical about the longitudinal axis.

In an embodiment, step 1240 may comprise assembling the selected preform capillaries into a stacked assembly, wherein the selected preform capillaries are oriented such that the portion of each of the selected preform capillaries, within which the measured wall thicknesses vary from the nominal wall thickness by no more than the maximum thickness variation, faces a longitudinal axis of the stacked assembly, said stacked assembly being substantially symmetrical about the longitudinal axis; and inserting the stacked assembly into the glass tube to form the PCF preform.

In an embodiment, step 1240 may comprise: inserting one of the selected preform capillaries into the glass tube; orienting the inserted preform capillary such that the portion of the inserted preform capillary, within which the measured wall thicknesses vary from the nominal wall thickness by no more than the maximum thickness variation, faces the longitudinal axis of glass tube; fixing the inserted preform capillary to the inner surface of the glass tube; rotating the glass tube by a predefined angle to allow another selected preform capillary to be inserted; and repeating the inserting, orienting, fixing and rotating steps until all of the selected preform capillaries have been inserted and fixed to the glass tube.

In an embodiment, step 1240 may further comprise marking a central region of the portion of each of the selected preform capillaries within which the measured wall thicknesses vary from the nominal wall thickness by no more than the maximum thickness variation. In an embodiment, one or more lines may be inscribed (e.g., by means of a laser beam, a knife edge, or any other suitable tools) across one or both end facets of each selected preform capillary to indicate a middle point or boundaries of the wall portion having the satisfactory thicknesses and facing the longitudinal axis of the glass tube. In an embodiment, one or more lines may be inscribed along the outer surface of the wall portion having the satisfactory thicknesses and facing the longitudinal axis of the glass tube.

PCF preforms produced using the above described method 1200 may then be used to draw PCFs. Thus, the present invention also provides a method of producing PCFs. With reference to Figure 13, the method 1300 may comprise for example the following three main steps.

Step 1310: producing a PCF preform according to the method 1200 of producing PCF preforms.

Step 1320: drawing a PCF cane from the PCF preform. In an embodiment, step 1320 may be substantially the same as the second stage of the conventional fiber drawing process, as described above.

Step 1330: drawing a final PCF from the PCF cane. In an embodiment, step 1330 may be substantially the same as the third stage of the conventional fiber drawing process, as described above.

In an embodiment, the final PCF produced using the method 1300 may be a HC-PCF comprising a hollow core axially extending along the HC-PCF and a cladding portion having a single ring arrangement of preform capillaries surrounding the hollow core along the HC-PCF (e.g., as shown in Figure 7), wherein the variation in the wall thicknesses of the preform capillaries of the fiber may be for example less than 20%, less than 15%, less than 10%, less than 5%, or less than 1% of the overall average wall thickness.

In an embodiment, the overall average wall thickness of the preform capillaries of the HC-PCF produced by the method 1300 may be for example less than 200 nm, less than 180 nm, less than 160 nm, less than 140 nm, or less than 100 nm.

In contrast with PCFs produced through the conventional fiber drawing process (e.g., as described above), dimensions of PCFs produced by the foregoing embodiments are more accurately controlled and thus less deviated from design targets. For example, in case of a HC-PCF, the application of the foregoing embodiments ensures that at least the portions of the capillary walls that face the hollow core of the fiber (where the light guiding effect is strongest) have more uniformed (or less varied) thicknesses, which enable a better control of the bandwidths and positions of the fiber resonances resulting from the interactions between the guided light and the capillary walls.

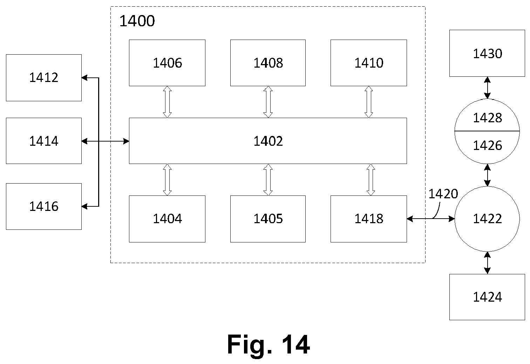

Figure 14 is a block diagram that illustrates a computer system 1400 that may assist in implementing the methods and flows disclosed herein. Computer system 1400 includes a bus 1402 or other communication mechanism for communicating information, and a processor 1404 (or multiple processors 1404 and 1405) coupled with bus 1402 for processing information. Computer system 1400 also includes a main memory 1406, such as a random access memory (RAM) or other dynamic storage device, coupled to bus 1402 for storing information and instructions to be executed by processor 1404. Main memory 1406 also may be used for storing temporary variables or other intermediate information during execution of instructions to be executed by processor 1404. Computer system 1400 further includes a read only memory (ROM) 1408 or other static storage device coupled to bus 1402 for storing static information and instructions for processor 1404. A storage device 1410, such as a magnetic disk or optical disk, is provided and coupled to bus 1402 for storing information and instructions.

Computer system 1400 may be coupled via bus 1402 to a display 1412, such as a cathode ray tube (CRT) or flat panel or touch panel display for displaying information to a computer user. An input device 1414, including alphanumeric and other keys, is coupled to bus 1402 for communicating information and command selections to processor 1404. Another type of user input device is cursor control 1416, such as a mouse, a trackball, or cursor direction keys for communicating direction information and command selections to processor 1404 and for controlling cursor movement on display 1412. This input device typically has two degrees of freedom in two axes, a first axis (e.g., x) and a second axis (e.g., y), that allows the device to specify positions in a plane. A touch panel (screen) display may also be used as an input device.

One or more of the methods as described herein may be performed by computer system 1400 in response to processor 1404 executing one or more sequences of one or more instructions contained in main memory 1406. Such instructions may be read into main memory 1406 from another computer-readable medium, such as storage device 1410. Execution of the sequences of instructions contained in main memory 1406 causes processor 1404 to perform the process steps described herein. One or more processors in a multi-processing arrangement may also be employed to execute the sequences of instructions contained in main memory 1406. In an alternative embodiment, hard-wired circuitry may be used in place of or in combination with software instructions. Thus, the description herein is not limited to any specific combination of hardware circuitry and software.

The term "computer-readable medium" as used herein refers to any medium that participates in providing instructions to processor 1404 for execution. Such a medium may take many forms, including but not limited to, non-volatile media, volatile media, and transmission media. Non-volatile media include, for example, optical or magnetic disks, such as storage device 1410. Volatile media include dynamic memory, such as main memory 1406. Transmission media include coaxial cables, copper wire and fiber optics, including the wires that comprise bus 1402. Transmission media can also take the form of acoustic or light waves, such as those generated during radio frequency (RF) and infrared (IR) data communications. Common forms of computer-readable media include, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 1404 for execution. For example, the instructions may initially be borne on a magnetic disk of a remote computer. The remote computer can load the instructions into its dynamic memory and send the instructions over a telephone line using a modem. A modem local to computer system 1400 can receive the data on the telephone line and use an infrared transmitter to convert the data to an infrared signal. An infrared detector coupled to bus 1402 can receive the data carried in the infrared signal and place the data on bus 1402. Bus 1402 carries the data to main memory 1406, from which processor 1404 retrieves and executes the instructions. The instructions received by main memory 1406 may optionally be stored on storage device 1410 either before or after execution by processor 1404.

Computer system 1400 also preferably includes a communication interface 1418 coupled to bus 1402. Communication interface 1418 provides a two-way data communication coupling to a network link 1420 that is connected to a local network 1422. For example, communication interface 1418 may be an integrated services digital network (ISDN) card or a modem to provide a data communication connection to a corresponding type of telephone line. As another example, communication interface 1418 may be a local area network (LAN) card to provide a data communication connection to a compatible LAN. Wireless links may also be implemented. In any such implementation, communication interface 1418 sends and receives electrical, electromagnetic or optical signals that carry digital data streams representing various types of information.

Network link 1420 typically provides data communication through one or more networks to other data devices. For example, network link 1420 may provide a connection through local network 1422 to a host computer 1424 or to data equipment operated by an Internet Service Provider (ISP) 1426. ISP 1426 in turn provides data communication services through the worldwide packet data communication network, now commonly referred to as the "Internet" 1428. Local network 1422 and Internet 1428 both use electrical, electromagnetic or optical signals that carry digital data streams. The signals through the various networks and the signals on network link 1420 and through communication interface 1418, which carry the digital data to and from computer system 1400, are exemplary forms of carrier waves transporting the information.

Computer system 1400 may send messages and receive data, including program code, through the network(s), network link 1420, and communication interface 1418. In the Internet example, a server 1430 might transmit a requested code for an application program through Internet 1428, ISP 1426, local network 1422 and communication interface 1418. One such downloaded application may provide for one or more of the techniques described herein, for example. The received code may be executed by processor 1404 as it is received, and/or stored in storage device 1410, or other non-volatile storage for later execution. In this manner, computer system 1400 may obtain application code in the form of a carrier wave.

Further embodiments are disclosed in the subsequent list of numbered clauses:

1. A method of producing photonic crystal fiber (PCF) preforms, comprising

obtaining a plurality of preform capillaries;
measuring the wall thickness of each of the plurality of preform capillaries along at least a portion of its circumference at one or more axial positions;
selecting a number of preform capillaries from the plurality of preform capillaries at least based on a thickness criterion, the thickness criterion being that the wall thickness along at least a circumferential portion of a preform capillary varies from a nominal wall thickness by no more than a maximum thickness variation; and
placing the selected preform capillaries in a glass tube (or jacket tube) to form a PCF preform having at least one ring arrangement of the selected preform capillaries; wherein the selected preform capillaries are oriented such that the portion of each of the selected preform capillaries, within which the measured wall thicknesses vary from the nominal wall thickness by no more than the maximum thickness variation, faces a longitudinal axis of the glass tube, said glass tube being substantially symmetrical about the longitudinal axis.

2. The method as defined in clause 1, wherein the placing step comprises assembling the selected preform capillaries to obtain a stacked assembly, wherein the selected preform capillaries are oriented such that said circumferential portion of each of the selected preform capillaries, within which the measured wall thickness varies from the nominal wall thickness by no more than the maximum thickness variation, faces a longitudinal axis of the stacked assembly, said stacked assembly being substantially symmetrical about the longitudinal axis; and inserting the stacked assembly into the glass tube to form the PCF preform.

3. The method as defined in clause 1, wherein the placing step comprises:

inserting one of the selected preform capillaries into the glass tube;
orienting the inserted preform capillary such that the portion of the inserted preform capillary, within which the measured wall thicknesses vary from the nominal wall thickness by no more than the maximum thickness variation, faces the longitudinal axis of glass tube;
fixing the inserted preform capillary to the inner surface of the glass tube;
rotating the glass tube by a predefined angle to allow another selected preform capillary to be inserted; and
repeating the inserting, orienting, fixing and rotating steps until all of the selected preform capillaries have been inserted and fixed to the glass tube.

4. The method as defined in any preceding clause, wherein the step of obtaining the plurality of preform capillaries comprises drawing the plurality of preform capillaries from a plurality of glass tubes.

5. The method as defined in any preceding clause, wherein the wall thickness of each preform capillary is measured by means of an interferometric optical sensor.

6. The method as defined in any preceding clause, wherein the measuring step comprises measuring the wall thickness at a plurality of axial positions along at least a portion of the full length of each preform capillary.

7. The method as defined in any preceding clause, wherein the measuring step further comprises generating a set of azimuthal-resolved wall thickness data for each of the plurality of axial positions.

8. The method as defined in any preceding clause, wherein the measuring step comprises measuring the wall thickness of each of the plurality of preform capillaries along at least 25% of its circumference.

9. The method as defined in any preceding clause, wherein the measuring step comprises measuring the wall thickness of each of the plurality of preform capillaries along a majority or all of its circumference.

10. The method as defined in any preceding clause, wherein said circumferential portion comprises at least 25% of the circumference.

11. The method as defined in any preceding clause, wherein said circumferential portion comprises at least 50% of the circumference.

12. The method as defined in any preceding clause, wherein the nominal wall thickness is determined prior to carrying out the method.

13. The method as defined in any of clauses 1 to 11, wherein the nominal wall thickness is determined based on the measured wall thicknesses of the plurality of preform capillaries.

14. The method as defined in clause 13, wherein the determination of the nominal wall thickness further comprises determining an overall average wall thickness by averaging the measured wall thicknesses over the plurality of preform capillaries.

15. The method as defined in clause 14, wherein the determination of an overall wall thickness comprises determining a per-capillary average wall thickness for each preform capillary and averaging these per-capillary average wall thicknesses.

16. The method as defined in clause 15, wherein the determination of a per-capillary average wall thickness may comprise:

determining one or more circumferentially averaged wall thickness values per each preform capillary, each circumferentially averaged wall thickness value being obtained by averaging the wall thicknesses measured along the at least a portion of the circumference of the preform capillary at a respective axial position; and averaging said circumferentially averaged wall thickness values are averaged per capillary.

17. The method as defined in clause 14, wherein the determination of an overall wall thickness comprises:

determining one or more circumferentially averaged wall thickness values per each preform capillary, each circumferentially averaged wall thickness value being obtained by averaging the wall thicknesses measured along the at least a portion of the circumference of the preform capillary at a respective axial position; and averaging said circumferentially averaged wall thickness values.

18. The method as defined in any preceding clause, wherein the nominal wall thickness is less than 200 $\mu$m.

19. The method as defined in any preceding clause, wherein the nominal wall thickness is less than 180 $\mu$m.

20. The method as defined in any preceding clause, wherein the nominal wall thickness is less than 160 $\mu$m.

21. The method as defined in any preceding clause, wherein the nominal wall thickness is less than 140 $\mu$m.

22. The method as defined in any preceding clause, wherein the maximum thickness variation is less than 15%.

23. The method as defined in any preceding clause, wherein the maximum thickness variation is less than 10%.

24. The method as defined in any preceding clause, wherein the maximum thickness variation is less than 5%.

25. The method as defined in any preceding clause, further comprises identifying for each preform capillary a wall portion within which the measured thicknesses fall within the thickness range.

26. The method as defined in any preceding clause, wherein the placing step further comprises marking a central region of the circumferential portion of each of the selected preform capillaries, within which the measured wall thicknesses fall within the thickness range.

27. The method as defined in any preceding clause, wherein the number of the selected preform capillaries is at least six.

28. The method as defined in any preceding clause, wherein said assembling step assembles the preform capillaries into a single ring around a hollow core.

29. A method of producing photonic crystal fibers (PCFs), comprising:

producing a PCF preform according to any of preceding clause;
drawing a PCF cane from the PCF preform; and
drawing a final PCF from the PCF cane.

30. A PCF product produced using the method as defined in clause 29.

31. The PCF product as defined in clause 30 is a hollow-core PCF (HC-PCF) comprising a hollow core axially extending along the HC-PCF and a cladding portion having a single ring arrangement of preform capillaries surrounding the hollow core along the HC-PCF, wherein the variation in wall thickness of the preform capillaries of the HC-PCF is less than 20% of their average wall thickness.

32. A PCF product comprising a hollow core axially extending along the HC-PCF and a cladding portion having a single ring arrangement of glass capillaries surrounding the hollow core along the HC-PCF, wherein the variation in wall thickness of the glass capillaries of the HC-PCF is less than 20% of their average wall thickness.

33. The PCF as defined in clause 31 or 32, wherein the variation in wall thickness of the preform capillaries of the HC-PCF is less than 15% of their average wall thickness.

34. The PCF as defined in any of clauses 31 to 33, wherein the variation in wall thickness of the preform capillaries of the HC-PCF is less than 10% of their average wall thickness.

35. The PCF as defined in any of clauses 31 to 34, wherein the variation in wall thickness of the preform capillaries of the HC-PCF is less than 5% of their average wall thickness.

36. The PCF as defined in any of clauses 31 to 35, wherein the average wall thickness of the preform capillaries of the HC-PCF is less than 200 nm.

37. The PCF product as defined in any of clauses 31 to 36, wherein the average wall thickness of the preform capillaries of the HC-PCF is less than 180 nm.

38. The PCF product as defined in any of clauses 31 to 37, wherein the average wall thickness of the preform capillaries of the HC-PCF is less than 160 nm.

39. The PCF product as defined in any of clauses 31 to 38, wherein the average wall thickness of the preform capillaries of the HC-PCF is less than 140 nm.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

**Claims**

1. A method of producing photonic crystal fiber (PCF) preforms, comprising

obtaining a plurality of preform capillaries;
measuring the wall thickness of each of the plurality of preform capillaries along at least a portion of its circumference at one or more axial positions;
selecting a number of preform capillaries from the plurality of preform capillaries at least based on a thickness criterion, the thickness criterion being that the wall thickness along at least a circumferential portion of a preform capillary varies from a nominal wall thickness by no more than a maximum thickness variation; and
placing the selected preform capillaries in a glass tube or jacket tube to form a PCF preform having at least one ring arrangement of the selected preform capillaries; wherein the selected preform capillaries are oriented such that the portion of each of the selected preform capillaries, within which the measured wall thicknesses vary from the nominal wall thickness by no more than the maximum thickness variation, faces a longitudinal axis of the glass tube, said glass tube being substantially symmetrical about the longitudinal axis.

2. The method as claimed in claim 1, wherein the placing step comprises assembling the selected preform capillaries to obtain a stacked assembly, wherein the selected preform capillaries are oriented such that said circumferential portion of each of the selected preform capillaries, within which the measured wall thickness varies from the nominal wall thickness by no more than the maximum thickness variation, faces a longitudinal axis of the stacked assembly, said stacked assembly being substantially symmetrical about the longitudinal axis; and inserting the stacked assembly into the glass tube to form the PCF preform.

3. The method as claimed in claim 1, wherein the placing step comprises:

   inserting one of the selected preform capillaries into the glass tube;
   orienting the inserted preform capillary such that the portion of the inserted preform capillary, within which the measured wall thicknesses vary from the nominal wall thickness by no more than the maximum thickness variation, faces the longitudinal axis of glass tube;
   fixing the inserted preform capillary to the inner surface of the glass tube;
   rotating the glass tube by a predefined angle to allow another selected preform capillary to be inserted; and
   repeating the inserting, orienting, fixing and rotating steps until all of the selected preform capillaries have been inserted and fixed to the glass tube.

4. The method as claimed in any preceding claim, wherein the step of obtaining the plurality of preform capillaries comprises drawing the plurality of preform capillaries from a plurality of glass tubes.

5. The method as claimed in any preceding claim, wherein the wall thickness of each preform capillary is measured by means of an interferometric optical sensor.

6. The method as claimed in any preceding claim, wherein the measuring step comprises measuring the wall thickness at a plurality of axial positions along at least a portion of the full length of each preform capillary.

7. The method as claimed in any preceding claim, wherein the measuring step further comprises generating a set of azimuthal-resolved wall thickness data for each of the plurality of axial positions.

8. The method as claimed in any preceding claim, wherein the measuring step comprises measuring the wall thickness of each of the plurality of preform capillaries along at least 25% of its circumference.

9. The method as claimed in any preceding claim, wherein said circumferential portion comprises at least 25% of the circumference.

10. The method as claimed in any preceding claim, wherein the nominal wall thickness is less than 200 $\mu$m.

11. The method as claimed in any preceding claim, wherein the maximum thickness variation is less than 15%.

12. The method as claimed in any preceding claim, further comprises identifying for each preform capillary a wall portion within which the measured thicknesses fall within the thickness range.

13. The method as claimed in any preceding claim, wherein the placing step further comprises marking a central region of the circumferential portion of each of the selected preform capillaries, within which the measured wall thicknesses fall within the thickness range.

14. A PCF product comprising a hollow core axially extending along the HC-PCF and a cladding portion having a single ring arrangement of glass capillaries surrounding the hollow core along the HC-PCF, wherein the variation in wall thickness of the glass capillaries of the HC-PCF is less than 20% of their average wall thickness.

15. The PCF as claimed in claim 14, wherein the average wall thickness of the preform capillaries of the HC-PCF is less than 200 nm.

**Fig. 1**

**Fig. 2**

LA

SC1

SC3

CL

MT

SC2

-1    0    +1

**Fig. 3**

2

4

SM1

Z

X

PU

W

I

6

Z

8

λ

X

**Fig. 4**

LS

LSO

LSP

LSD

LSB

DET

PGR

DGR

BE1

ANG

BE2

Z

X

W

MLO

**Fig. 5**

PU

PD

SRI

RB

SM

IB

RSO

SI

OL

AS

AM

SP

W

**Fig. 6**

**Fig. 7**

**Fig. 8**

**Fig. 9**

CAP-1  JT      CAP-2  HC-2  SP-2      CAP-3  SP-3

(a)              (b)              (c)

HC-3

25 µm

Fig. 10

$\lambda_q$

CL (dB/m)

$10^4$

$10^2$

$10^0$

$10^{-2}$

$10^{-4}$

$\lambda$ (nm)

Fig. 11

1200

```
┌──────────┐
│   1210   │
└──────────┘
     │
     ▼
┌──────────┐
│   1220   │
└──────────┘
     │
     ▼
┌──────────┐
│   1230   │
└──────────┘
     │
     ▼
┌──────────┐
│   1240   │
└──────────┘
```

**Fig. 12**

1300

```
┌──────────┐
│   1310   │
└──────────┘
     │
     ▼
┌──────────┐
│   1320   │
└──────────┘
     │
     ▼
┌──────────┐
│   1330   │
└──────────┘
```

**Fig. 13**

1400

| 1412 | 1406 | 1408 | 1410 |

1402

| 1414 |
| 1416 |

| 1404 | 1405 | 1418 |

1420

1430

1428
1426

1422

1424

## Fig. 14

Europäisches
Patentamt

European
Patent Office

Office européen
des brevets

# EUROPEAN SEARCH REPORT

**Application Number**

EP 22 17 7524

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/009231 A1 (HERAEUS QUARZGLAS [DE]) 21 January 2021 (2021-01-21) * page 19, lines 21-25; claims; figure 1 * ----- | 1-15 | INV. C03B23/207 C03B37/012 C03B37/027 |
| A | US 2019/011634 A1 (LYNGSØE JENS KRISTIAN [DK] ET AL) 10 January 2019 (2019-01-10) * paragraphs [0044] – [0047] * ----- | 15 | |

**TECHNICAL FIELDS SEARCHED (IPC)**

C03B

The present search report has been drawn up for all claims

| Place of search | Date of completion of the search | Examiner |
|---|---|---|
| The Hague | 31 October 2022 | Creux, Sophie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 7524

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2022

| Patent document cited in search report | | Publication date | Patent family member(s) | | Publication date |
|---|---|---|---|---|---|
| WO 2021009231 | A1 | 21-01-2021 | CN | 114127022 A | 01-03-2022 |
| | | | EP | 3766850 A1 | 20-01-2021 |
| | | | JP | 2022541488 A | 26-09-2022 |
| | | | US | 2022267193 A1 | 25-08-2022 |
| | | | WO | 2021009231 A1 | 21-01-2021 |
| US 2019011634 | A1 | 10-01-2019 | CA | 3008053 A1 | 29-06-2017 |
| | | | CN | 108474905 A | 31-08-2018 |
| | | | CN | 113608296 A | 05-11-2021 |
| | | | CN | 113608297 A | 05-11-2021 |
| | | | EP | 3394650 A1 | 31-10-2018 |
| | | | JP | 7107840 B2 | 27-07-2022 |
| | | | JP | 2019504350 A | 14-02-2019 |
| | | | JP | 2022140483 A | 26-09-2022 |
| | | | KR | 20180089513 A | 08-08-2018 |
| | | | SG | 11201804738S A | 30-07-2018 |
| | | | US | 2019011634 A1 | 10-01-2019 |
| | | | US | 2020103587 A1 | 02-04-2020 |
| | | | US | 2022011501 A1 | 13-01-2022 |
| | | | WO | 2017108061 A1 | 29-06-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6952253 B
- US 20100328655 A
- US 2011102753 A1
- US 20120044470 A
- US 20110249244 A
- US 20110026032 A
- EP 1628164 A
- US 451599
- US 11708678 B
- US 12256780 B
- US 12486449 B
- US 12920968 B
- US 12922587 B
- US 13000229 B
- US 13033135 B
- US 13533110 B
- US 13891410 B
- WO 2011012624 A
- US 20160161863 A
- US 20160370717 A1
- US 7265364 B
- US 7646471 B
- US 2010233600 A1
- WO 2016102127 A1
- US 6961116 B
- US 2015261097 A1
- US 2004015085 A1
- WO 2017032454 A1
- WO 2018127266 A1
- US 9160137 B1